# FASCICULE DE BREVET EUROPEEN

(11) **EP 2 390 181 B1**
(45) Date de publication et mention de la délivrance du brevet: **04.07.2012**
(21) Numéro de dépôt: 11003551.6
(22) Date de dépôt: 02.05.2011
(51) Int. Cl.: B64C 27/32, B64D 45/02

(54) **Rotor muni d'un dispositif de protection contre la foudre, et aéronef pourvu dudit rotor**
Mit einer Blitzschutzvorrichtung ausgestatteter Rotor, und mit einem solchen Rotor ausgestattetes Luftfahrzeug
Rotor provided with a lightning protection device and aircraft provided with said rotor

(30) Priorité: 24.05.2010 FR 1002168
(43) Date de publication de la demande: 30.11.2011
(73) Titulaire: EUROCOPTER, 13725 Marignane Cédex (FR)
(72) Inventeur: Chuc, Charles, 13012 Marseille (FR); Imbert, Nicolas, 13008 Marseille (FR)
(74) Mandataire: GPI & Associés

(56) Documents cités:
- EP-A1- 0 718 495
- EP-A1- 0 754 624
- EP-A1- 1 930 586
- EP-A2- 1 154 537
- US-A- 4 625 256
- US-B1- 7 377 750

## Description

La présente invention concerne un rotor muni d'un dispositif de protection contre la foudre, et un aéronef pourvu dudit rotor tel qu'un aéronef à voilure tournante.

L'invention se situe donc dans le domaine technique des moyens de protection contre la foudre, et plus particulièrement des moyens de protection contre la foudre des aéronefs à voilure tournante.

En effet, les aéronefs sont susceptibles d'être frappés par la foudre lors de vols dans des conditions climatiques difficiles. En cas d'impact de foudre, il convient de vérifier que l'aéronef n'a pas été détérioré. Or, il se trouve qu'il est particulièrement difficile de détecter le passage suivi par la foudre suite à un tel impact, et par suite les équipements tant mécaniques qu'électriques traversés par un courant électrique potentiellement destructeur.

Sur un hélicoptère muni d'une voilure tournante comportant un rotor principal de sustentation entraîné par une boîte de transmission de puissance, la foudre impacte généralement le rotor principal, traverse la cellule de l'hélicoptère avant de s'échapper par la queue de cet hélicoptère par exemple. La boîte de transmission de puissance et notamment son étage de réduction de vitesse épicycloïdal, les moyens de fixation de la boîte de transmission à la cellule ou encore les équipements électroniques traversés par la foudre sont alors par exemple endommagés.

Cependant, le chemin suivi par cette foudre étant difficilement identifiable, un impact de foudre peut conduire à une immobilisation de longue durée de l'hélicoptère au cours de laquelle le constructeur va vérifier le bon fonctionnement d'un grand nombre d'équipements. Cet impact peut à l'extrême conduire au remplacement des tous les équipements potentiellement affectés.

On connaît notamment l'enseignement des documents US 7377750 B1, EP 1154537 A2, EP 1930586 A1, EP 0718495 A1, EP 0754624 A1 et US 4625256 A.

De plus, le document US 2009/038819 présente une éolienne munie d'une nacelle portée par un mât, la nacelle supportant un rotor effectuant une rotation autour d'un axe de rotation horizontal.

L'éolienne est munie d'un moyen de protection rotatif et d'un moyen de protection fixe reliés par un moyen de liaison pourvu de deux moyens de contact, ces deux moyens de contact étant reliés par un conducteur électrique établissant une connexion continue.

Le document US4625256 présente une éolienne munie d'un rotor fixé sur un arbre d'entraînement s'étendant le long d'un axe de rotation vertical.

De plus, l'éolienne possède un moyen de protection pour définir un chemin de passage privilégié d'un courant électrique généré par un impact de foudre. Ce moyen de protection prévoit un premier anneau tournant de forme tronconique fixé à l'arbre d'entraînement et un deuxième anneau non tournant également de forme tronconique, les premier et deuxième anneaux étant séparés par un espace annulaire.

La présente invention a alors pour objet de proposer un rotor muni d'un moyen de protection contre la foudre optimisé.

Selon l'invention, un rotor est muni d'un moyeu et d'une pluralité de pales supportées par ce moyeu, le rotor comportant un mât solidaire du moyeu pour entraîner en rotation le moyeu et les pales autour d'un axe de rotation, le mât étant par exemple apte à être entraîné en rotation par une boîte de transmission de puissance fixée à une cellule d'un aéronef par des moyens de fixation, le rotor ayant un moyen de protection contre la foudre.

Le rotor est notamment remarquable en ce que le moyen de protection comporte un moyen de conduction tournant du courant électrique solidaire en rotation du mât et relié à chaque pale par un premier organe de liaison électrique. De plus, le moyen de protection comprend un moyen de conduction non tournant du courant électrique qui est en regard du moyen de conduction tournant, le moyen de conduction non tournant étant désolidarisé en rotation du mât. Le moyen de protection a alors un moyen d'amorçage de liaison électrique agencé sur au moins un moyen de conduction dans un espace séparant le moyen de conduction non tournant du moyen de conduction tournant, le moyen de conduction non tournant étant muni d'un deuxième organe de liaison électrique apte à être relié électriquement à un organe ciblé extérieur au rotor.

On note que l'on qualifie de tournant les organes effectuant une rotation autour dudit axe de rotation et de non tournant les organes n'effectuant pas une telle rotation. Le moyeu, les pales, le mât du rotor, les éléments du premier organe de liaison électrique sont notamment des organes tournant au sens de la définition précédente alors que les éléments du deuxième organe de liaison électrique sont notamment des organes non tournant. Les moyens d'amorçage agencés sur le moyen de conduction tournant sont des organes tournants, des moyens d'amorçage agencés sur le moyen de conduction non tournant étant au contraire des organes non tournants.

Ainsi, lorsque la foudre impacte le rotor, le courant électrique généré par la foudre passe de la pale vers le moyen de conduction tournant par le premier organe de liaison électrique, un câble réalisé à l'aide d'un alliage d'aluminium. Le moyen d'amorçage de liaison électrique facilite alors la création d'un arc électrique entre le moyen de conduction tournant et le moyen de conduction non tournant par une concentration locale d'électrons.

Le courant électrique passe alors dans le moyen de conduction non tournant puis est évacué rapidement vers un organe ciblé par le deuxième organe de liaison électrique, un câble réalisé à l'aide d'un alliage d'aluminium. L'organe ciblé peut être la cellule de l'aéronef ou encore un moyen de fixation d'une boîte de transmission de puissance, ce moyen de fixation pouvant être isolé électriquement de cette boîte de transmission de puissance.

La circulation du courant électrique est alors guidée par le moyen de protection sur un chemin prédéterminé de circulation pour éviter des organes sensibles du rotor, le cheminement de ce courant électrique étant très rapide pour limiter les dégâts éventuels.

Le rotor peut en outre comprendre une ou plusieurs des caractéristiques qui suivent.

Par exemple, le moyen de conduction tournant et le moyen de conduction non tournant étant portés par le mât, le rotor comprend des isolants électriques entre le moyen de conduction tournant et le mât ainsi qu'entre le moyen de conduction non tournant et le mât.

Ainsi, même si le courant électrique résultant de la foudre a un comportement erratique, il ne pourra pas passer des moyens de conduction vers le mât, du moins dans des proportions susceptibles de dégrader les organes liés au mât.

Par ailleurs, au moins un premier organe de liaison électrique peut être fixé d'une part à un point de métallisation du bord d'attaque d'une pale et d'autre part au moyen de conduction tournant. On constate en effet qu'en fixant le premier organe de liaison électrique au bord d'attaque, on favorise le passage de la foudre selon le chemin prédéfini, la foudre étant principalement initiée au bord d'attaque de la pale.

De plus, le rotor comporte éventuellement un moyen d'isolation électrique disposé entre le point de métallisation et le moyeu pour garantir que la majeure partie du courant électrique généré par la foudre passe par le premier moyen de liaison.

Chaque pale ayant une surface sustentatrice et une portion de fixation au moyeu, le moyen d'isolation électrique peut être un organe à grande résistance électrique interposé entre le point de métallisation et le moyeu au niveau de la portion de fixation, un manchon en matière plastique par exemple.

Par ailleurs, le moyen d'amorçage de liaison électrique comporte au moins un pivot d'amorçage pointu.

Chaque pivot d'amorçage permet de concentrer les électrons par un effet de pointe afin de favoriser la création d'un arc électrique entre les moyens de conduction électriques tournant et non tournant. L'arc électrique étant créé rapidement, la probabilité pour que le courant électrique généré par la foudre suive un chemin distinct du chemin prédéfini est minimisée.

Il est à noter que le moyen d'amorçage de liaison électrique comporte favorablement au moins un pivot d'amorçage pointu agencé à l'aplomb de chaque pale.

On minimise ainsi le chemin à parcourir par le courant électrique pour favoriser le passage de ce courant électrique selon le chemin prédéfini. Des pivots d'amorçage peuvent aussi se trouver en dehors des zones à l'aplomb des pales.

Par ailleurs, le rotor comportant un moyen de modification du pas des pales muni d'un ensemble comprenant un plateau cyclique non tournant désolidarisé en rotation du mât et un plateau cyclique tournant solidaire en rotation du mât, le plateau cyclique tournant étant relié à chaque pale par une bielle de pas, le moyen de conduction tournant est fixé au plateau cyclique tournant et le moyen de conduction non tournant est fixé au plateau cyclique non tournant.

Par exemple, chaque plateau cyclique ayant une périphérie interne en vis-à-vis du mât et une périphérie externe, les moyens de conduction non tournant et tournant sont agencés respectivement à la périphérie externe des plateaux cycliques non tournant et tournant. Les moyens de conduction non tournant et tournant peuvent d'ailleurs être des plateaux, optionnellement profilés pour des raisons aérodynamiques.

Favorablement, le rotor peut alors être pourvu d'une première entretoise isolante électriquement entre le moyen de conduction tournant et le plateau cyclique tournant ainsi que d'une deuxième entretoise isolante électriquement entre le moyen de conduction non tournant et le plateau cyclique non tournant. Le courant électrique ne peut alors pas circuler selon de grandes proportions d'un moyen de conduction vers le plateau cyclique correspondant.

En outre, le moyen de protection comporte éventuellement un moyen de détection et de quantification du courant électrique généré par un impact de foudre pour évaluer les dégradations éventuelles et permettre par exemple de programmer une action de maintenance.

Selon une première variante, ce moyen de détection et de quantification comporte au moins un pivot d'amorçage du moyen d'amorçage de liaison électrique.

Le pivot d'amorçage fait office de pion d'amorçage mais aussi de fusible. Lorsque ce pivot d'amorçage est traversé par un courant électrique généré par un impact de foudre, il se détériore.

En visualisant la détérioration par une érosion d'au moins un pivot d'amorçage, on peut évaluer l'intensité du courant électrique ayant traversé le moyen de protection. Par exemple un pivot d'amorçage en pointe réalisé dans un matériau métallique peut être érodé de 5 millimètres après le passage d'un courant de foudre de 20 kA (kilo-ampères), les valeurs de l'érosion et de l'intensité de la foudre étant données à titre indicatif uniquement pour illustrer la caractéristique énoncée.

Selon une deuxième variante cumulable avec la première variante, le moyen de détection et de quantification comporte au moins un capteur de mesure du champ magnétique rémanent, agencé sur le chemin prédéterminé et par exemple sur un des moyens de conduction à savoir le moyen de conduction tournant ou le moyen de conduction non tournant.

Outre un rotor, l'invention vise aussi un aéronef muni de ce rotor.

Dès lors, selon l'invention, un aéronef est muni d'une installation motrice entraînant une boîte de transmission de puissance fixée à une cellule de l'aéronef par des moyens de fixation, l'aéronef ayant un rotor muni d'un moyeu et d'une pluralité de pales supportées par ce moyeu, le rotor comportant un mât solidaire du moyeu pour entraîner en rotation le moyeu et les pales autour d'un axe de rotation, le mât étant entraîné en rotation par la boîte de transmission de puissance, le rotor ayant un moyen de protection contre la foudre.

Le moyen de protection comporte alors un moyen de conduction tournant du courant électrique solidaire en rotation du mât et relié à chaque pale par un premier organe de liaison électrique, le moyen de protection ayant un moyen de conduction non tournant du courant électrique qui est en regard du moyen de conduction tournant en étant désolidarisé en rotation du mât, le moyen de protection ayant un moyen d'amorçage de liaison électrique agencé sur au moins un moyen de conduction dans un espace séparant le moyen de conduction non tournant du moyen de conduction tournant, le moyen de conduction non tournant étant muni d'un deuxième organe de liaison électrique apte à être relié électriquement à un organe ciblé extérieur au rotor.

On note que l'organe ciblé peut être tout organe ne faisant pas partie du rotor. Favorablement, l'organe ciblé peut comprendre les moyens de fixation de la boîte de transmission de puissance, tels que des barres de fixation obliques par exemple. On peut alors isoler électriquement les moyens de fixation de la boîte de transmission de puissance, en conservant à l'inverse une liaison électrique entre les moyens de fixations et le reste de la cellule.

La présente invention a aussi pour objet le procédé de fabrication du dispositif précité.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef muni d'un rotor selon une réalisation préférée, et
- la figure 2, une vue d'un rotor selon une réalisation alternative.

Les éléments présents dans plusieurs figures distinctes sont affectés d'une seule et même référence.

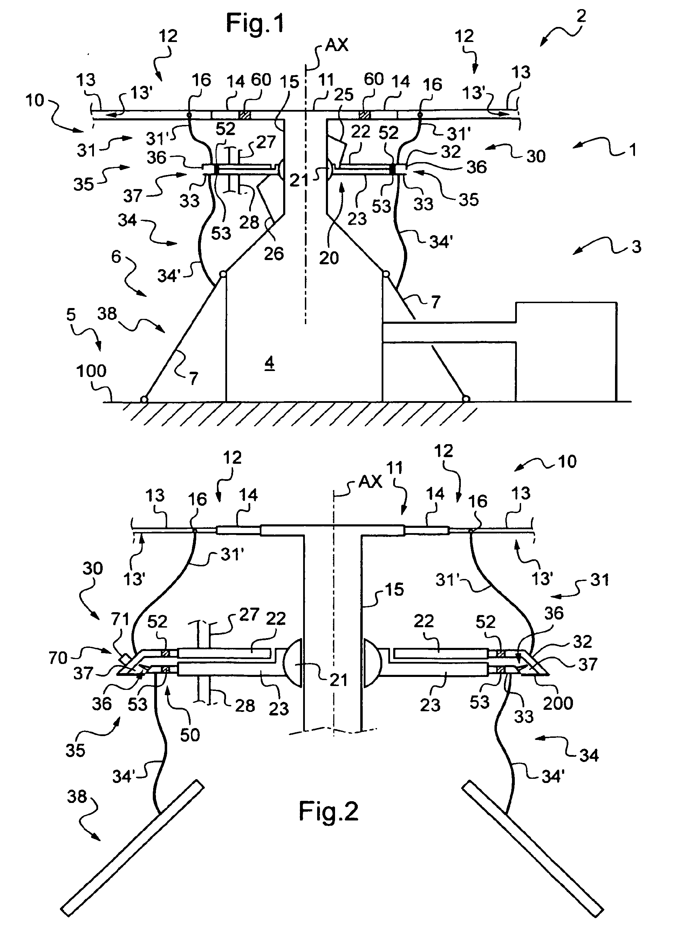

La figure 1 présente un aéronef 1 pourvu d'une cellule 5 et d'une voilure tournante 2 munie d'un rotor 10 effectuant une rotation autour d'un axe de rotation AX par rapport à la cellule 5. L'aéronef 1 comporte alors une installation motrice 3 pour mettre en rotation le rotor 10 par l'intermédiaire d'une boîte de transmission de puissance 4. L'installation motrice 3 et la boîte de transmission de puissance 4 sont solidaires de la cellule 5 en étant par exemple fixés à un plancher 100 dénommé parfois « plancher moteur ».

Plus particulièrement, la boîte de transmission de puissance 4 est fixée par des moyens de fixation 6 à la cellule 5, tels que des barres de fixation 7 obliques.

Les éléments effectuant une rotation autour de l'axe de rotation AX sont dits « tournant » alors que les éléments n'effectuant pas une rotation autour de l'axe de rotation AX en étant solidaires de la cellule 5 sont dits « non tournant ».

Le rotor 10 est muni d'un mât 15 entraîné en rotation autour de l'axe de rotation AX par la boîte de transmission de puissance 4, ce mât 15 étant parfois dénommé « mât rotor ». Le mât 15 peut être fixé à un arbre de sortie de la boîte de transmission de puissance 4 ou encore constitué ledit arbre de sortie par exemple.

Dès lors, le mât 15 est fixé à un moyeu 11 du rotor portant une pluralité de pales 12, chaque pale ayant une surface sustentatrice 13 et un moyen de fixation 14 au moyeu 11. Par exemple, le moyen de fixation 14 est un manchon distinct de la surface sustentatrice ou encore un manchon intégré à cette surface sustentatrice.

Sous l'impulsion de la boîte de transmission de puissance 4, le mât 15 entraîne alors le moyeu 11 et les pales 12 du rotor 10 en rotation autour de l'axe de rotation AX.

Par ailleurs, le rotor 10 comprend un moyen de modification 20 du pas des pales 12 du rotor. Ce moyen de modification 20 comprend un ensemble de deux plateaux cycliques muni d'une part d'un plateau cyclique non tournant 23 qui est désolidarisé en rotation autour de l'axe de rotation AX du mât 15 ainsi que du moyeu 11 et des pales 12 notamment , et, d'autre part d'un plateau cyclique tournant 22 qui est solidaire en rotation autour de l'axe de rotation AX du mât 15 ainsi que du moyeu 11 et des pales 12 notamment.

Le plateau cyclique tournant 22 est alors agencé sur le plateau cyclique non tournant en étant libre d'effectuer une rotation autour de l'axe de rotation AX. De plus, le plateau cyclique non tournant est agencé autour du mât 5 par l'intermédiaire d'une rotule 21 apte à effectuer une translation le long dudit axe de rotation AX. On note aussi que le plateau cyclique tournant 22 est lié au mât 15 par un premier compas 24, le plateau cyclique non tournant 23 étant lié à la cellule 5 par un deuxième compas 26.

Le plateau cyclique non tournant 23 est alors commandé par une pluralité de bielles de commande 28 schématisées sur la figure 1, le plateau cyclique tournant 22 étant lié à chaque pale par une bielle de pas 27, une telle bielle de pas 27 étant schématisée sur la figure 1.

Conformément à l'invention, le rotor 10 comprend un moyen de protection 30 contre les impacts de foudre, pour évacuer le plus rapidement possible le long d'un chemin prédéfini le courant électrique généré par un tel impact de foudre.

Ce moyen de protection 30 comprend un premier organe de liaison électrique 31 par pale, par exemple un câble 31' en un matériau électriquement conducteur. Chaque premier organe de liaison électrique 31 est fixé à un point de métallisation 16 de la pale correspondante, favorablement au bord d'attaque 13' de cette pale.

Le moyen de protection 30 comporte de plus un moyen de conduction tournant 32 solidaire en rotation autour de l'axe de rotation AX du mât 15, du moyeu 11 et des pales 12 du rotor 10 notamment. Le moyen de conduction tournant 32 est un plateau, chaque premier organe de fixation 31 étant fixé à ce moyen de conduction tournant 32.

Ce moyen de conduction tournant 32 coopère avec un moyen de conduction non tournant 33 du moyen de protection, le moyen de conduction non tournant 33 étant désolidarisé en rotation autour de l'axe de rotation AX du mât 15, du moyeu 11 et des pales 12 du rotor 10 notamment.

Les moyens de conduction tournant 32 et non tournant 33 sont en regard l'un de l'autre, un espace 37 séparant le moyen de conduction tournant 32 du moyen de conduction non tournant 33. De plus, les moyens de conduction tournant 32 et non tournant 33 peuvent être parallèles entre eux et coaxiaux.

Le moyen de conduction tournant 32 est un plateau par exemple.

De plus, pour favoriser la création d'un arc électrique entre le moyen de conduction tournant 32 et le moyen de conduction non tournant 33 afin de permettre la circulation d'un courant électrique généré par la foudre, le moyen de protection 30 comporte un moyen d'amorçage de liaison électrique 35 agencé sur au moins un moyen de conduction. Par exemple, le moyen d'amorçage de liaison électrique 35 est agencé indifféremment soit de façon préférentielle uniquement sur le moyen de conduction tournant 32, soit uniquement sur le moyen de conduction non tournant 33.

De plus, chaque élément d'amorçage du moyen d'amorçage est disposé dans l'espace 37 en étant en contact avec un unique moyen de conduction. Par exemple, chaque pivot d'amorçage est fixé à un unique moyen de conduction tout en étant dirigé vers l'autre moyen de conduction.

Ainsi, aucun élément du moyen d'amorçage ne relie physiquement le moyen de conduction tournant 32 et le moyen de conduction non tournant 33, un interstice d'une longueur prédéterminée séparant chaque élément d'amorçage d'un moyen de conduction.

Ce moyen d'amorçage de liaison électrique 35 peut être pourvu d'au moins un pivot d'amorçage 36, favorablement pointu pour permettre une concentration d'électrons susceptibles de générer un arc électrique. Par exemple, au moins un pivot d'amorçage 36 est agencé à l'aplomb de chaque pale 12.

Enfin, le moyen de protection 30 est muni d'un deuxième organe de liaison électrique 34 pour relier le moyen de conduction non tournant à un organe ciblé 38 extérieur au rotor 10, c'est-à-dire un organe de la cellule 5 lié au rotor 10 par exemple.

Cet organe de liaison électrique 34 peut comporter une pluralité de conducteurs électriques, des câbles électriques 34' par exemple, reliés chacun à un organe ciblé.

Ces organes ciblés peuvent être les moyens de fixation 6 de la boîte de transmission de puissance 4. Dès lors, les moyens de fixation 6 peuvent être isolés électriquement de la boîte de transmission de puissance 4, par un isolant en matière plastique par exemple, et électriquement liés au plancher 100.

On note que chaque deuxième organe de liaison électrique 34 peut être lié à d'autres éléments de la cellule, le plancher 100 par exemple.

Par suite, lorsqu'une pale est foudroyée, le courant électrique longe le bord d'attaque 13' de la pale 12, traverse le premier organe de liaison 31 pour atteindre le moyen de conduction tournant 32. Le courant électrique se propage alors au moyen de conduction non tournant 33 puis est évacué par le deuxième organe de liaison électrique vers les organes ciblés, les barres de fixation 7 par exemple.

Dès lors, ce courant électrique n'atteint pas les organes sensibles du rotor 10, à savoir par exemple les compas, les plateaux cycliques et les articulations des pales. De même, le courant ne traverse pas la boîte de transmission de puissance 4, les barres de fixation 7 étant isolées électriquement de cette boîte de transmission de puissance 4.

Pour favoriser le passage du courant électrique généré par un foudroiement d'une pale le long du chemin prédéfini explicité précédemment, le rotor 10 comporte un moyen d'isolation électrique 60 disposé entre le point de métallisation 16 de chaque pale et le moyeu 11.

Par exemple, ce moyen d'isolation est une partie plastique du manchon 14 d'une pale 12 ayant une grande résistance électrique.

Le courant électrique est alors incité à passer par le premier organe de liaison électrique.

De même, le moyen de conduction tournant 32 et le moyen de conduction non tournant 33 entourant le mât 15, le rotor 10 comprend des isolants électriques 50 entre le moyen de conduction tournant 32 et le mât 15 ainsi qu'entre le moyen de conduction non tournant 33 et le mât 15.

Par exemple, en référence à la figure 1, le moyen de conduction tournant 32 est fixé à la périphérie externe du plateau cyclique tournant 22 pour être agencé autour du mât 15, et le moyen de conduction non tournant 33 étant fixé à la périphérie externe du plateau cyclique non tournant 23 pour être agencé autour de ce mât 15.

Selon cette réalisation, il est alors possible de prévoir une première entretoise 52 isolante électriquement entre le moyen de conduction tournant 32 et le plateau cyclique tournant 22, ainsi qu'une deuxième entretoise 53 isolante électriquement entre le moyen de conduction non tournant 33 et le plateau cyclique non tournant 23.

Par ailleurs, le moyen de protection 30 peut comporter un moyen de détection et de quantification 70 du courant électrique généré par un impact de foudre, par exemple un moyen de détection et de quantification 70 de l'intensité du courant électrique généré par un impact de foudre.

Selon la réalisation de la figure 2, le moyen de détection et de quantification 70 comporte au moins un pivot d'amorçage 36 du moyen d'amorçage de liaison électrique 35.

Lors d'un foudroiement, le pivot d'amorçage 36 va être détérioré. Un simple examen visuel peut permettre de constater cette détérioration. L'examen du pivot d'amorçage 36 peut consister en un examen de l'érosion du pivot d'amorçage 36. Lors du passage du courant électrique, le pivot d'amorçage 36 va chauffer, cet échauffement provoquant une érosion quantifiable du pivot d'amorçage.

En référence à la figure 2, selon une réalisation alternative le moyen de détection et de quantification 70 comporte au moins un capteur de mesure 71 du champ magnétique rémanent disposé sur le chemin prédéterminé. Ce capteur de mesure 71 peut être relié à une mémoire stockant les mesures pour une exploitation ultérieure par exemple.

Le capteur de mesure 71 du champ rémanent est par exemple agencé sur un des moyens de conduction 32, 33, le moyen de conduction tournant 32 sur la figure 2.

Par ailleurs, on note sur cette figure 2 qu'au moins un des moyens de conduction peut avoir une forme aérodynamique, le moyen de conduction tournant ayant par exemple une forme tronconique.

De plus, un des moyens de conduction 32, 33 peut comprendre un moyen d'obturation 200 au moins partielle de l'espace 37 pour notamment protéger le moyen d'amorçage de liaison électrique 35 du brouillard salin par exemple. Selon une variante, le moyen d'obturation est une plaque solidaire d'un moyen de conduction 32 affleurant l'autre moyen de conduction 33.

Enfin, on note que les pivots d'amorçage 36 du moyen d'amorçage de liaison électrique 35 sont agencés sur le moyen de conduction tournant 32 selon la variante de la figure 1, et sur le moyen de conduction non tournant 33 selon la variante de la figure 2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

En effet, on comprend que le rotor pourrait être un rotor d'éolienne par exemple, le deuxième moyen de liaison électrique étant lié à un moyen de métallisation de la cellule de l'éolienne portant le rotor par exemple, dénommée généralement nacelle.

## Revendications

1. Rotor (10) muni d'un moyeu (11) et d'une pluralité de pales (12) supportées par ledit moyeu (11), ledit rotor (10) comportant un mât (15) solidaire dudit moyeu (11) pour entraîner en rotation le moyeu (11) et lesdites pales (12) autour d'un axe de rotation (AX), ledit rotor (10) ayant un moyen de protection (30) contre la foudre,
ledit moyen de protection (30) comportant un moyen de conduction tournant (32) du courant électrique solidaire en rotation dudit mât (15) relié à chaque pale (12) par un premier organe de liaison électrique (31), ledit moyen de protection (30) ayant un moyen de conduction non tournant (33) du courant électrique qui est en regard dudit moyen de conduction tournant (32), ledit moyen de conduction non tournant étant désolidarisé en rotation dudit mât (15), ledit moyen de protection (30) ayant un moyen d'amorçage de liaison électrique (35) agencé sur au moins un moyen de conduction (32, 33) dans un espace (37) séparant ledit moyen de conduction non tournant (33) dudit moyen de conduction tournant (32), ledit moyen de conduction non tournant (33) étant muni d'un deuxième organe de liaison électrique (34) apte à être relié électriquement à un organe ciblé (38) extérieur audit rotor (10) ; ledit rotor (10) comportant un moyen de modification (20) du pas desdites pales (12) muni d'un ensemble comprenant un plateau cyclique non tournant (23) désolidarisé en rotation dudit mât (15) et un plateau cyclique tournant (22) solidaire en rotation dudit mât (15), ledit plateau cyclique tournant (22) étant relié à chaque pale (12) par une bielle de pas (27), ledit moyen de conduction tournant (32) étant fixé au plateau cyclique tournant (22) et ledit moyen de conduction non tournant (33) étant fixé au plateau cyclique non tournant (23).

2. Rotor selon la revendication 1,
**caractérisé en ce que** ledit moyen de conduction tournant (32) et ledit moyen de conduction non tournant (33) étant portés par ledit mât (15), ledit rotor (10) comprend des isolants électriques (50) entre ledit moyen de conduction tournant (32) et ledit mât (15) ainsi qu'entre ledit moyen de conduction non tournant (33) et ledit mât (15).

3. Rotor selon l'une quelconque des revendications 1 à 2,
**caractérisé en ce qu'**au moins un premier organe de liaison électrique (31) est fixé d'une part à un point de métallisation (16) du bord d'attaque (13') d'une pale (12) et d'autre part audit moyen de conduction tournant (32).

4. Rotor selon l'une quelconque des revendications 1 à 3,
**caractérisé en ce que** ledit rotor (10) comporte un moyen d'isolation électrique (60) disposé entre ledit point de métallisation (16) et ledit moyeu (11).

5. Rotor selon l'une quelconque des revendications 1 à 4,
**caractérisé en ce que** ledit moyen d'amorçage de liaison électrique (35) comporte au moins un pivot d'amorçage (36) pointu.

6. Rotor selon la revendication 5,
**caractérisé en ce que** ledit moyen d'amorçage de liaison électrique (35) comporte au moins un pivot d'amorçage (36) pointu agencé à l'aplomb de chaque pale (12).

7. Rotor selon l'une quelconque des revendications 1 à 6,
**caractérisé en ce qu'**il est pourvu d'une première entretoise (52) isolante électriquement entre ledit moyen de conduction tournant (32) et le plateau cyclique tournant (22) ainsi que d'une deuxième entretoise (53) isolante électriquement entre ledit moyen de conduction non tournant (33) et le plateau cyclique non tournant (23).

8. Rotor selon l'une quelconque des revendications 1 à 7,
**caractérisé en ce que** ledit moyen de protection (30) comporte un moyen de détection et de quantification (70) du courant électrique généré par un impact de foudre.

9. Rotor selon la revendication 8,
**caractérisé en ce que** ledit moyen de détection et de quantification (70) comporte au moins un pivot d'amorçage (36) dudit moyen d'amorçage de liaison électrique (35).

10. Rotor selon la revendication 8,
**caractérisé en ce que** ledit moyen de détection et de quantification (70) comporte au moins un capteur de mesure (71) du champ magnétique rémanent.

11. Rotor selon la revendication 10,
**caractérisé en ce que** ledit capteur de mesure (71) du champ rémanent est agencé sur un desdits moyens de conduction (32, 33).

12. Aéronef (1) muni d'une installation motrice (3) entraînant une boîte de transmission de puissance (4) fixée à une cellule (5) de l'aéronef (1) par des moyens de fixation (6), ledit aéronef (1) ayant un rotor (10) muni d'un moyeu (11) et d'une pluralité de pales (12) supportées par ledit moyeu (11), ledit rotor (10) comportant un mât (15) solidaire dudit moyeu (11) pour entraîner en rotation le moyeu (11) et lesdites pales (12) autour d'un axe de rotation (AX), ledit mât (15) étant entraîné en rotation par ladite boîte de transmission de puissance (4), ledit rotor (10) ayant un moyen de protection (30) contre la foudre,
**caractérisé en ce que** ledit moyen de protection (30) comporte un moyen de conduction tournant (32) du courant électrique solidaire en rotation dudit mât (15) relié à chaque pale (12) par un premier organe de liaison électrique (31), ledit moyen de protection (30) ayant un moyen de conduction non tournant (33) du courant électrique qui est en regard dudit moyen de conduction tournant (32) en étant désolidarisé en rotation dudit mât (15), ledit moyen de protection (30) ayant un moyen d'amorçage de liaison électrique (35) agencé sur au moins un moyen de conduction (32, 33) dans un espace (37) séparant ledit moyen de conduction non tournant (33) dudit moyen de conduction tournant (32), ledit moyen de conduction non tournant (33) étant muni d'un deuxième organe de liaison électrique (34) apte à être relié électriquement à un organe ciblé (38) extérieur audit rotor (10).

13. Aéronef selon la revendication 12,
**caractérisé en ce que** ledit organe ciblé (38) comprend lesdits moyens de fixation (6).

## Claims

1. Rotor (10) provided with a hub (11) and a plurality of blades (12) supported by said hub (11), said rotor (10) including a mast (15) integral with said hub (11) to drive the hub (11) and said blades (12) in rotation about an axis of rotation (AX), said rotor (10) having a lightning protection means (30),
said protection means (30) including a rotary electric current conduction means (32) integral in rotation with said mast (15) and connected to each blade (12) via a first electrical connection member (31), said protection means (30) having a non-rotary electric current conduction means (33) facing said rotary conduction means (32), said non-rotary conduction means not being integral in rotation with said mast (15), said protection means (30) having an electrical connection trigger means (35) arranged on at least one conduction means (32, 33) in a space (37) separating said non-rotary conduction means (33) from said rotary conduction means (32), said non-rotary conduction means (33) being provided with a second electrical connection member (34) suitable for being electrically connected to a target member (38) external to said rotor (10); said rotor (10) including a means (20) for modifying the pitch of said blades (12), said means being provided with an assembly comprising a non-rotary swashplate (23) that is not integral in rotation with said mast (15) and a rotary swashplate (22) that is integral in rotation with said mast (15), said rotary swashplate (22) being connected to each blade (12) via a pitch rod (27), said rotary conduction means (32) being fastened to the rotary swashplate (22) and said non-rotary conduction means (33) being fastened to the non-rotary swashplate (23).

2. Rotor according to Claim 1,
**characterised in that** said rotary conduction means (32) and said non-rotary conduction means (33) are carried by said mast (15), said rotor (10) comprising electrical insulation (50) between said rotary conduction means (32) and said mast (15) and also between said non-rotary conduction means (33) and said mast (15).

3. Rotor according to either one of Claims 1 to 2,
**characterised in that** at least a first electrical connection member (31) is fastened on the one hand to a metallisation point (16) of the leading edge (13') of a blade (12) and on the other hand to said rotary conduction means (32).

4. Rotor according to any one of Claims 1 to 3,
**characterised in that** said rotor (10) includes an electrical insulation means (60) located between said metallisation point (16) and said hub (11).

5. Rotor according to any one of Claims 1 to 4,
**characterised in that** said electrical connection trigger means (35) includes at least one pointed trigger pivot (36).

6. Rotor according to Claim 5,
**characterised in that** said electrical connection trigger means (35) includes at least one pointed trigger pivot (36) arranged vertically in line with each blade (12).

7. Rotor according to any one of Claims 1 to 6,
**characterised in that** it is provided with a first electrically insulating spacer (52) between said rotary conduction means (32) and the rotary swashplate (22), and with a second electrically insulating spacer (53) between said non-rotary conduction means (33) and the non-rotary swashplate (23).

8. Rotor according to any one of Claims 1 to 7,
**characterised in that** said protection means (30) includes a detection and quantification means (70) for detecting and quantifying the electric current generated by a lightning strike.

9. Rotor according to Claim 8,
**characterised in that** said detection and quantification means (70) includes at least one trigger pivot (36) of said electrical connection trigger means (35).

10. Rotor according to Claim 8,
**characterised in that** said detection and quantification means (70) includes at least one sensor (71) for measuring the remanent magnetic field.

11. Rotor according to Claim 10,
**characterised in that** said sensor (71) for measuring the remanent field is arranged on one of said conduction means (32, 33).

12. Aircraft (1) provided with a powerplant (3) driving a power gearbox (4) fastened to an airframe (5) of the aircraft (1) by fastening means (6), said aircraft (1) having a rotor (10) provided with a hub (11) and a plurality of blades (12) supported by said hub (11), said rotor (10) including a mast (15) integral with said hub (11) to drive the hub (11) and said blades (12) in rotation about an axis of rotation (AX), said mast (15) being driven in rotation by said power gearbox (4), said rotor (10) having a lightning protection means (30),
**characterised in that** said protection means (30) includes a rotary electric current conduction means (32) integral in rotation with said mast (15) and connected to each blade (12) by a first electrical connection member (31), said protection means (30) having a non-rotary electric current conduction means (33) facing said rotary conduction means (32) while not being integral in rotation with said mast (15), said protection means (30) having an electrical connection trigger means (35) arranged on at least one conduction means (32, 33) in a space (37) separating said non-rotary conduction means (33) from said rotary conduction means (32), said non-rotary conduction means (33) being provided with a second electrical connection member (34) suitable for being electrically connected to a target member (38) external to said rotor (10).

13. Aircraft according to Claim 12,
**characterised in that** said target member (38) comprises said fastening means (6).

## Patentansprüche

1. Rotor (10) mit einer Nabe (11) und einer Mehrzahl von Rotorblättern (12), die von der Nabe (11) getragen werden, wobei der Rotor (10) eine mit der Nabe (11) fest verbundene Welle (15) aufweist, um die Nabe (11) und die Rotorblätter (12) in eine Drehbewegung um eine Drehachse (AX) zu versetzen, wobei der Rotor (10) eine Blitzschutzvorrichtung (30) aufweist,
wobei die Blitzschutzvorrichtung (30) ein elektrischen Strom leitendes sich drehendes Mittel (32) aufweist, welches drehfest mit der Welle (15) verbunden ist und mit jedem Rotorblatt (12) über ein erstes elektrisches Verbindungsorgan (31) verbunden ist, wobei die Blitzschutzvorrichtung (30) ein sich nicht drehendes elektrischen Strom leitendes Mittel (33) aufweist, welches gegenüber dem sich drehenden leitenden Mittel (32) angeordnet ist, wobei das sich nicht drehende leitende Mittel von der Drehbewegung der Welle (15) entkoppelt ist, wobei die Blitzschutzvorrichtung (30) ein elektrisch verbindendes Zündmittel (35) aufweist, welches auf mindestens einem leitenden Mittel (32, 33) in einem Raum (37) angeordnet ist, der das sich nicht drehende leitende Mittel (33) von dem sich drehenden leitenden Mittel (32) trennt, wobei das sich nicht drehende leitende Mittel (33) mit einem zweiten elektrischen Verbindungsorgan (34) versehen ist, welches elektrisch mit einem Zielorgan (38) außerhalb des Rotors (10) verbindbar ist, wobei der Rotor (10) ein Mittel (20) zur Veränderung des Anstellwinkels der Rotorblätter (12) aufweist, welches mit einer Anordnung versehen ist, die eine sich nicht drehende Taumelscheibe (23) aufweist, die bezüglich einer Drehbewegung von der Welle (15) entkoppelt ist, und eine sich drehende Taumelscheibe (22), die drehfest mit der Welle (15) verbunden ist, wobei die sich drehende Taumelscheibe (22) mit jedem Rotorblatt (12) über eine Anstellstange (27) verbunden ist, und das sich drehende leitende Mittel (32) an der sich drehenden Taumelscheibe (22) befestigt ist und das sich nicht drehende leitende Mittel (33) an der sich nicht drehenden Taumelscheibe (23) befestigt ist.

2. Rotor nach Anspruch 1
**dadurch gekennzeichnet, dass** das sich drehende leitende Mittel (32) und das sich nicht drehende leitende Mittel (33) von der Welle (15) getragen werden, und der Rotor (10) elektrische Isolierungen (50) zwischen dem sich drehenden leitenden Mittel (32) und der Welle (15) sowie zwischen dem sich nicht drehenden leitenden Mittel (33) und der Welle (15) aufweist.

3. Rotor nach einem der Ansprüche 1 oder 2,
**dadurch gekennzeichnet, dass** mindestens ein erstes elektrisches Verbindungsorgan (31) einerseits an einem metallisierten Punkt (16) der Stirnkante (13') eines Rotorblatts (12) und andererseits an dem sich drehenden leitenden Mittel (32) befestigt ist.

4. Rotor nach einem der Ansprüche 1 bis 3,
**dadurch gekennzeichnet, dass** der Rotor (10) eine elektrische Isolierung (60) zwischen dem Metallisierungspunkt (16) und der Nabe (11) aufweist.

5. Rotor nach einem der Ansprüche 1 bis 4,
**dadurch gekennzeichnet, dass** das elektrisch verbindende Zündmittel (35) mindestens einen spitzen Zündzapfen (36) aufweist.

6. Rotor nach Anspruch 5,
**dadurch gekennzeichnet, dass** das elektrisch verbindende Zündmittel (35) mindestens einen spitzen Zündzapfen (36) aufweist, der senkrecht zu jedem Rotorblatt (12) angeordnet ist.

7. Rotor nach einem der Ansprüche 1 bis 6,
**dadurch gekennzeichnet, dass** er mit einem ersten elektrisch isolierenden Abstandshalter (52) zwischen dem sich drehenden leitenden Mittel (32) und der sich drehenden Taumelscheibe (22) sowie mit einem zweiten elektrisch isolierenden Abstandshalter (53) zwischen dem sich nicht drehenden leitenden Mittel (33) und der sich nicht drehenden Taumelscheibe (23) versehen ist.

8. Rotor nach einem der Ansprüche 1 bis 7,
**dadurch gekennzeichnet, dass** die Blitzschutzvorrichtung (30) ein Mittel zur Erfassung und Quantifizierung (70) des von einem Blitzeinschlag erzeugten elektrischen Stroms aufweist.

9. Rotor nach Anspruch 8,
**dadurch gekennzeichnet, dass** das Mittel zur Erfassung und Quantifizierung (70) mindestens einen Zündbolzen (36) des elektrisch verbindenden Zündmittels (35) aufweist.

10. Rotor nach Anspruch 8,
**dadurch gekennzeichnet, dass** das Mittel zur Erfassung und Quantifizierung (70) mindestens einen Messsensor (71) des remanenten Magnetfelds aufweist.

11. Rotor nach Anspruch 10,
**dadurch gekennzeichnet, dass** der Messsensor (71) des remanenten Feldes auf einem der leitenden Mittel (32, 33) angeordnet ist.

12. Luftfahrzeug (1) mit einer Antriebsanlage (3), welche ein Leistungsgetriebe (4) antreibt, das an einer Zelle (5) des Luftfahrzeugs (1) mit Befestigungsmitteln (6) befestigt ist, wobei das Luftfahrzeug (1) einen Rotor (10) aufweist, der mit einer Nabe (11) und einer Mehrzahl von Rotorblättern (12), die von der Nabe (11) getragen werden, versehen ist, wobei der Rotor (10) eine mit der Nabe (11) fest verbundene Welle (15) zum Antreiben der Nabe (11) und der Rotorblätter (12) zu einer Drehbewegung um eine Drehachse (AX) aufweist,
wobei die Welle (15) durch das Leistungsgetriebe (4) gedreht wird, wobei der Rotor (10) eine Blitzschutzvorrichtung (30) aufweist,
**dadurch gekennzeichnet, dass** die Blitzschutzvorrichtung (30) ein sich drehendes elektrischen Strom leitendes Mittel (32) aufweist, welches drehfest mit der Welle (15) verbunden ist und mit jedem Rotorblatt (12) über ein erstes elektrisches Verbindungsorgan (31) verbunden ist, wobei die Blitzschutzvorrichtung (30) ein elektrischen Strom leitendes sich nicht drehendes Mittel (33) aufweist, welches gegenüber dem sich drehenden leitenden Mittel (32) angeordnet ist und von der Drehbewegung der Welle (15) entkoppelt ist, wobei die Blitzschutzvorrichtung (30) ein elektrisch verbindendes Zündmittel (35) aufweist, welches auf mindestens einem leitenden Mittel (32, 33) in einem Raum (37) angeordnet ist, der das sich nicht drehende leitende Mittel (33) von dem sich drehenden leitenden Mittel (32) trennt, wobei das sich nicht drehende leitende Mittel (33) mit einem zweiten elektrischen Verbindungsorgan (34) versehen ist, welches elektrisch mit einem Zielorgan (38) außerhalb des Rotors (10) verbindbar ist.

13. Luftfahrzeug nach Anspruch 12,
**dadurch gekennzeichnet, dass** das Zielorgan (38) die Befestigungsmittel (6) umfasst.
